(19) Europäisches Patentamt
European Patent Office
Office européen des brevets

(11) EP 0 628 575 B2

(12) # NEUE EUROPÄISCHE PATENTSCHRIFT

(45) Veröffentlichungstag und Bekanntmachung des Hinweises auf die Entscheidung über den Einspruch:
**27.02.2002 Patentblatt 2002/09**

(45) Hinweis auf die Patenterteilung:
**04.09.1996 Patentblatt 1996/36**

(21) Anmeldenummer: **93109238.1**

(22) Anmeldetag: **09.06.1993**

(51) Int Cl.$^7$: **C08F 10/10**, C08F 4/06, C08F 4/14

(54) **Verfahren zur Herstellung hochreaktiver Polyisobutene**

Process for the manufacture of highly reactive polyisobutenes

Procédé de préparation de polyisobutènes hautement réactifs

(84) Benannte Vertragsstaaten:
**AT CH DE ES FR GB IT LI LU NL SE**

(43) Veröffentlichungstag der Anmeldung:
**14.12.1994 Patentblatt 1994/50**

(73) Patentinhaber: **BASF Aktiengesellschaft**
**67063 Ludwigshafen (DE)**

(72) Erfinder: **Rath, Hans Peter, Dr.**
**D-6718 Gruenstadt (DE)**

(56) Entgegenhaltungen:

| | |
|---|---|
| **EP-A- 0 145 235** | **EP-A- 0 322 241** |
| **EP-A- 0 481 297** | **EP-A- 0 483 553** |
| **DE-A- 2 837 235** | **DE-C- 704 038** |
| **US-A- 2 099 090** | **US-A- 2 379 656** |
| **US-A- 3 024 226** | **US-A- 5 191 044** |

Bemerkungen:
Die Akte enthält technische Angaben, die nach dem Eingang der Anmeldung eingereicht wurden und die nicht in dieser Patentschrift enthalten sind.

EP 0 628 575 B2

## Beschreibung

Die vorliegende Erfindung betrifft ein Verfahren zur Herstellung hochreaktiver Polyisobutene mit einem Gehalt an endständigen Vinylidengruppierungen von über 80 Mol.-% und einem mittleren Molekulargewicht von 500 bis 5000 Dalton durch die kationische Polymerisation von Isobuten oder isobutenhaltigen Kohlenwasserstoffströmen in der flüssigen Phase mit Hilfe von Bortrifluorid-Alkohol-Komplexen als Katalysatoren und bei Temperaturen von 0°C bis -60°C.

Hochmolekulare Polyisobutene mit Molekulargewichten bis zu mehreren 100 000 Dalton sind seit langem bekannt und ihre Herstellung wird beispielsweise in H. Güterbock: Polyisobutylen und Mischpolymerisate, S. 77 bis 104, Springer, Berlin 1959, beschrieben. Die zur Zeit erhältlichen Polyisobutene dieses Molekulargewichtsbereiches werden meist mit Hilfe von Lewis-Säure-Katalysatoren, wie Aluminiumchlorid, Aluminiumalkylchloriden oder Bortrifluorid, hergestellt und haben meist weniger als 10 Mol.-% endständige Doppelbindungen (Vinylidengruppierungen) und eine Molekulargewichtsverteilung (Dispersität) zwischen 2 und 5.

Von diesen herkömmlichen Polyisobutenen sind die sogenannten hochreaktiven Polyisobutene zu unterscheiden, welche in der Regel mittlere Molmassen von 500 bis 5000 Dalton und einen hohen Gehalt an endständigen Vinylidengruppierungen von vorzugsweise deutlich über 60 Mol.-% haben. Solche hochreaktiven Polyisobutene werden als Zwischenprodukt zur Herstellung von Additiven für Schmier- und Kraftstoffe verwendet, wie sie beispielsweise in DE-A 27 02 604 beschrieben sind. Zur Herstellung dieser Additive werden zunächst durch Reaktion der endständigen Doppelbindungen des Polyisobutens mit Maleinsäureanhydrid, Polyisobuten-Maleinsäureanhydrid-Addukte, insbesondere Polyisobutenylbernsteinsäureanhydride, erzeugt, welche anschließend mit bestimmten Aminen zum fertigen Additiv umgesetzt werden. Da bei der Adduktbildung mit Maleinsäureanhydrid hauptsächlich die endständigen Vinylidengruppierungen reagieren, wohingegen die weiter im Innern der Makromoleküle liegenden Doppelbindungen je nach ihrer Lage im Makromolekül ohne die Zugabe von Halogenen zu keinem oder zu einem deutlich geringeren Umsatz führen, ist der Anteil an endständigen Vinylidengruppierungen im Molekül das wichtigste Qualitätskriterium für diesen Polyisobutentypus.

Über das Zustandekommen der endständigen Vinylidengruppierungen und die Isomerisierung der endständigen Doppelbindungen in den Isobutenmakromolekülen zu internen Doppelbindungen bestehen nach Puskas et al, J. Polymer Sci.: Symposium No. 56, 191 (1976) die im folgenden Formelschema wiedergegebenen Vorstellungen:

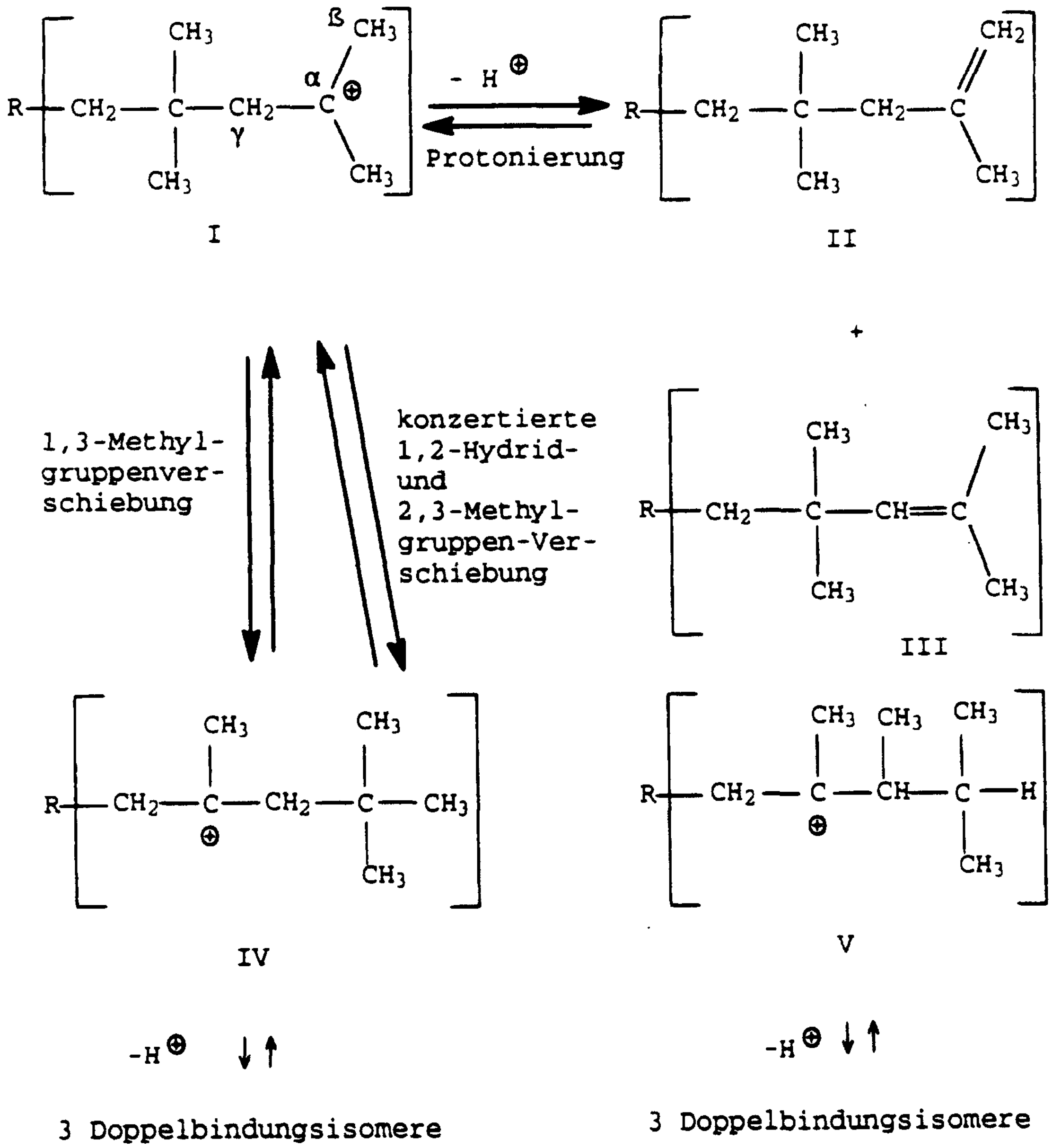


R: Polyisobutenrest

Das im Laufe der Polymerisationsreaktion entstehende Polyisobutenkation I kann durch die Abspaltung eines Protons in das betreffende Polyisobuten übergehen. Dabei kann das Proton sowohl aus einer der β-Methylgruppen oder aus der internen γ-Methylengruppe abgespalten werden. Je nachdem aus welcher dieser beiden Positionen das Proton abgespalten wird, entsteht dabei ein Polyisobuten mit einer endständigen Vinylidengruppierung II oder mit einer trisubstituierten, nahe dem Ende des Moleküls befindlichen Doppelbindung III.

Das Polyisobutenkation I ist relativ instabil und versucht sich durch Umlagerung in höhersubstituierte Kationen zu stabilisieren. Dabei können sowohl 1,3-Methylgruppenverschiebungen zum Polyisobutenkation IV als auch sukzessive oder konzertierte 1,2-Hydrid- und 2,3-Methylgruppenverschiebungen zum Polyisobutenkation V stattfinden. Aus den Kationen IV und V können sich, je nachdem aus welcher Position das Proton abgespalten wird, jeweils drei verschiedene doppelbindungsisomere Polyisobutene bilden. Es besteht aber auch die Möglichkeit, daß sich die Kationen IV und V weiter umlagern, mit der Wirkung, daß die Doppelbindung noch weiter ins Innere des Polyisobutenmakromoleküls wandert.

Alle diese Deprotonierungen und Umlagerungen sind Gleichgewichtsreaktionen und sind somit reversibel,

wobei allerdings, letztendlich die Bildung stabilerer, höhersubstituierter Kationen und somit die Bildung von Polyisobutenen mit innenständiger Doppelbindung unter Einstellung des thermodynamischen Gleichgewichtes bevorzugt ist. Diese Deprotonierungen, Protonierungen und Umlagerungen werden durch gegebenenfalls im Reaktionsgemisch enthaltende Säurespuren, insbesondere jedoch vom zur Katalyse der Polymerisation benötigten Lewis-Säure-Katalysator selbst katalysiert. Aufgrund dieser Sachlage und da lediglich Polyisobutene mit endständigen Vinylidengruppierungen gemäß Formel II sehr gut unter Adduktbildung mit Maleinsäureanhydrid reagieren, Polyisobutene der Formel III im Vergleich dazu bereits eine deutlich verminderte Reaktivität haben und andere Polyisobutene mit höhersubstituierten Doppelbindungen gegenüber Maleinsäureanhydrid praktisch unreaktiv sind, wird das fortwährende Bemühen vieler Forschungsgruppen, verbesserte Verfahren zur Herstellung hochreaktiver Polyisobutene oder Polyisobutene mit immer höheren Gehalten an endständigen Doppelbindungen zu finden, verständlich.

Nach der Lehre von DE-A 27 02 604 können reaktive Polyisobutene mit bis zu 88 Gew.-% endständigen Doppelbindungen durch die Bortrifluorid-katalysierte Polymerisation von Isobuten bei Temperaturen von -50 bis +30°C und bei Verweilzeiten von unter 10 Minuten erhalten werden. Ein niedrigerer Wert als 1,8 wird für die Dispersität bei den so hergestellten Polyisobutenen nicht gefunden.

Polyisobutene mit ähnlich hohen Anteilen endständiger Doppelbindungen, jedoch mit einer engeren Molekulargewichtsverteilung sind nach dem Verfahren der EP-A 145 235 herstellbar, indem man Isobuten in Gegenwart eines vorgebildeten Komplexes aus Bortrifluorid und einem primären Alkohol bei Temperaturen von -100 bis +50°C und bei einer Kontaktzeit für die Polymerisationsreaktion von mehr als 8 Minuten polymerisiert, wobei das Molverhältnis von Bortrifluorid zu Alkohol 0,5 zu 1 bis 5 zu 1 betragen soll. Nachteilig an diesem Verfahren ist, daß Polyisobutene mit einem hohen Gehalt an endständigen Doppelbindungen von über 80 % nur unter Inkaufnahme eines niedrigen Isobutenumsatzes erhältlich sind und die so gewonnenen Polyisobutene nur ein niedriges, mittleres Molekulargewicht haben.

EP-A 322 241 beschreibt ein Verfahren zur Herstellung von reaktivem Polyisobuten mittels eines Bortrifluorid-Katalysators. Nach den Angaben dieser Schrift kann dieser Katalysator mit einer Vielzahl von Promotoren in seiner Reaktivität modifiziert werden, beispielsweise mit Wasser, Alkoholen, Carbonsäuren, Carbonsäureanhydriden, Fluorwasserstoff, Ethern oder Gemischen dieser Verbindungen. In den Beispielen dieser Schrift wird allein Methanol als Promotor verwendet. Der nach diesem Verfahren erzielbare Gehalt an endständigen Doppelbindungen im Polyisobuten beträgt im besten Fall 64 %.

Polyisobutene mit einem Gehalt von bis zu 95 Molprozent endständigen Doppelbindungen sollen nach dem Gasphasenverfahren der US-A 3 166 546 sowie nach dem Verfahren von US-A 3 024 226 erzeugt werden können, in dem eine Bortrifluorid-Schwefeldioxid-Gasmischung als Katalysator verwendet wird. Die Charakterisierung dieser Polyisobutene stützt sich auf die Ergebnisse der Infrarot-Spektroskopie. Eine Untersuchung der nach diesen Verfahren hergestellten Polyisobutene mit Hilfe der zur Zeit der Abfassung dieses Patentes noch nicht üblichen, zur Bestimmung endständiger Doppelbindungen wesentlich spezifischeren und genaueren Methode der $^{13}C$-Kernresonanz- Spektroskopie ($^{13}C$-NMR-Spektroskopie) ergab jedoch nur einen Gehalt von maximal 40 Mol-% endständigen Doppelbindungen.

US-A 4 227 027 lehrt Bortrifluorid-katalysierte Alkyltransferreaktionen, wobei als Katalysatoren Addukte aus Bortrifluorid und Diolen oder Polyolen bei Temperaturen von 40 bis 120°C eingesetzt werden. Bei der Anwendung dieses Verfahrens auf die Polymerisation von Isobuten unter Anwendung eines Bortrifluorid-1,2-Butandiol-Adduktes als Katalysator entstand als einziges Produkt Diisobutylen. Polyisobuten wurde nicht gebildet.

Weitere Qualitätskriterien für Polyisobutene mit dem genannten Verwendungszweck sind deren mittleres Molekulargewicht und die Molekulargewichtsverteilung, auch als Dispersität bezeichnet, der im Polyisobuten enthaltenen Makromoleküle. Im allgemeinen werden Polyisobutene mit mittleren Molekulargewichten ($M_n$) von 500 bis 5000 Dalton als Zwischenprodukte zur Herstellung der erwähnten Schmier- und Kraftstoffadditive verwendet. Bevorzugt sind jedoch wegen ihrer besseren Wirksamkeit für diesen Zweck Polyisobutene mit Molekulargewichten von 800 bis 3000, insbesondere von 1000 bis 2500 Dalton.

Bei der Polymerisation von Isobuten entstehen Polyisobutenprodukte, deren Polyisobutenkomponenten, also die Polyisobutenmakromoleküle, eine mehr oder weniger breite, statistische Molekulargewichtsverteilung haben, mit der Folge, daß diese Polyisobutene, je breiter ihre Molekulargewichtsverteilung ist, einen immer größeren Anteil an Polyisobutenmakromolekülen mit relativ niedrigen oder relativ hohen Molekulargewichten enthalten, welche für den erwähnten Verwendungszweck mehr oder weniger ungeeignet, da relativ unwirksam, sind. Es besteht daher das Bestreben, hochreaktive Isobutene mit mittleren Molekulargewichten, welche in den bevorzugten Molekulargewichtsbereichen liegen, herzustellen, wobei deren Molekulargewichtsverteilung vorzugsweise möglichst eng sein sollte, um den Anteil an unerwünschten, relativ nieder- oder hochmolekularen Polyisobutenen im erzeugten Produkt zurückzudrängen und so dessen Qualität zu verbessern.

Der vorliegenden Erfindung lag nun die Aufgabe zugrunde, ein Verfahren zur Polymerisation von Isobuten zu Polyisobuten eines mittleren Molekulargewichts von 500 bis 5000 und mit einem hohen Gehalt an endständigen Doppelbindungen von mehr als 80 Mol-%, insbesondere mehr als 90 Mol-%, sowie einer engen Molekulargewichtsverteilung zu finden, das die wirtschaftliche Herstellung dieser Polyisobutene mit einer hohen Selektivität bei hohen

Isobutenumsätzen ermöglicht. Des weiteren sollten hochreaktive Polyisobutene mit einem Gehalt an endständigen Doppelbindungen von mehr als 90 Mol-% zur Verfügung gestellt werden, deren mittleres Molekulargewicht fakultativ im Bereich von 1000 bis 2500 Dalton liegen sollte und deren Wert für die Dispersität fakultativ kleiner als 2 sein sollte.

Dementsprechend wurde ein Verfahren zur Herstellung hochreaktiver Polyisobutene mit einem Gehalt an endständigen Vinylidengruppierungen von über 80 Mol-% und einem mittleren Molekulargewicht von 500 bis 5000 Dalton durch die kationische Polymerisation von Isobuten oder isobutenhaltigen Kohlenwasserstoffströmen in der flüssigen Phase mit Hilfe von Bortrifluorid als Katalysator und bei Temperaturen von 0°C bis -60°C gefunden, das dadurch gekennzeichnet ist, daß man in Gegenwart von einwertigen, geradkettigen oder verzweigten sekundären Alkoholen mit 3 bis 20 Kohlenstoffatomen polymerisiert und dabei ein Bortrifluorid/sek. Alkohol-Molverhältnis von 0.5 bis 0.9 anwendet

Unter endständigen Vinylidengruppierungen oder endständigen Doppelbindungen werden im Sinne der vorliegenden Anmeldung solche Doppelbindungen verstanden, deren Lage im Polyisobutenmakromolekül, durch die allgemeine Formel IIa

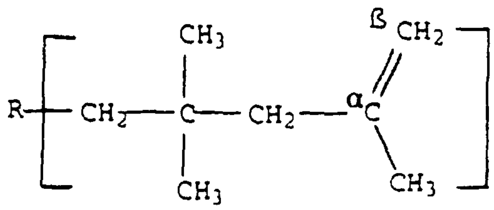

IIa

beschrieben wird, in der R für den betreffenden Polyisobutylenrest steht. Die Art und der Anteil der im erfindungsgemaß hergestellten Polyisobuten vorhandenen Doppelbindungen wird mit Hilfe der Methode der $^{13}C$-NMR-Spektroskopie bestimmt, wobei die beiden in Formel IIa mit $\alpha$ und $\beta$ markierten Kohlenstoffatome der endständigen Doppelbindung im $^{13}C$-NMR-Spektrum durch ihre Signale bei der chemischen Verschiebung von 114,4 bzw. 143,6 ppm identifizierbar sind und der Anteil der endständigen Doppelbindungen bezüglich anderer Arten von Doppelbindungen über die Ermittlung der Peakflächen der Signale in Relation zum Gesamtintegral der Olefinsignale errechnet wird.

Als mittleres Molekulargewicht oder mittlere Molmasse wird in dieser Anmeldung das Zahlenmittel $M_n$ des Molekulargewichts bezeichnet, das beispielsweise mit Hilfe der Gelpermeationschromatographie, durch Ozonolyse oder mittels Dampfdruckosmometrie bestimmt werden kann.

Mit dem erfindungsgemäßen Verfahren können Polyisobutene mit einem Gehalt von über 80 Mol-%, insbesondere von über 90 Mol-%, endständigen Vinylidengruppen durch die kationische Polymerisation von Isobuten in der flüssigen Phase bei Temperaturen von 0 bis -60°C, vorzugsweise von -4 bis -30°C und besonders bevorzugt bei -10 bis -20°C hergestellt werden, wobei mit Bortrifluorid in Gegenwart sekundärer Alkohole polymerisiert wird.

Da das Bortrifluorid in seinen Eigenschaften als Polymerisationskatalysator durch seine Komplexbildung mit den sekundären Alkoholen stark modifiziert, diese Änderung der Katalysatoreigenschaften auch vom Mengenverhältnis Bortrifluorid/sek. Alkohol unmittelbar beeinflußt wird und da außerdem diese Modifizierung der Katalysatoreigenschaften sich in entscheidendem Maße auf die Qualität des damit produzierten Polyisobutens, insbesondere auf seinen Gehalt an endständigen Doppelbindungen, auswirkt, werden diese sekundären Alkohole im folgenden auch als Cokatalysatoren bezeichnet.

Als sekundäre Alkohole eignen sich für diesen Zweck praktisch alle einwertigen, geradkettigen oder verzweigten sekundären Alkohole mit 3 bis 20 Kohlenstoffatomen. Bortrifluorid-Komplexe mit langkettigen Alkoholen mit 10 und mehr Kohlenstoffatomen haben den Vorteil, daß sie im Reaktionsmedium der Isobutenpolymerisation eine bessere Löslichkeit haben als Bortrifluorid-Komplexe mit kurzkettigen, sekundären Alkoholen, wie Isopropanol oder 2-Butanol.

Beispielhaft für geeignete sekundäre Alkohole seien die folgenden genannt: Isopropanol, 2-Butanol, sek.-Pentanole, sek.-Hexanole, sek.-Heptanole, sek.-Octanole, sek.-Nonanole, sek.-Decanole, sek.-Tridecanole, sek.-Hexadecanole, sek.-Eicosanole.

Die Bortrifluorid/sek.-Alkoholkomplexe werden zweckmäßigerweise durch Einleiten von gasförmigem Bortrifluorid in den betreffenden Alkohol oder vorzugsweise in eine Lösung des betreffenden Alkohols in einem Lösungsmittel hergestellt. Die Darstellung dieser Komplexe erfolgt in der Regel bei Temperaturen von -60 bis +40°C, vorzugsweise bei - 20 bis +40°C. Die Anwendung tieferer Temperaturen ist ebenfalls möglich, erfordert jedoch einen erhöhten technischen Aufwand zur Erzeugung derart tiefer Temperaturen. Die Komplexbildung von Bortrifluorid mit sekundären Alkoholen verläuft exotherm, weshalb die Reaktionsmischung vorteilhafterweise gekühlt wird, um sie auf der gewünschten Temperatur zu halten.

Viele Komplexe des Bortrifluorids mit sekundären Alkoholen sind bei tiefen Temperaturen hochviskose Flüssigkeiten oder, wie die Bortrifluorid-Komplexe mit mehrwertigen sekundären Alkoholen, sogar Feststoffe. In solchen Fällen ist es vorteilhaft, die Bortrifluorid-Komplexe in einem Lösungsmittel zu erzeugen. Geeignete Lösungsmittel sind beispielsweise Kohlenwasserstoffe, wie Pentan, Hexan, Isooctan oder halogenierte Kohlenwasserstoffe, wie Methylenchlorid oder Chloroform. Es können selbstverständlich auch Lösungsmittelgemische verwendet werden. In der Regel gilt, daß je polarer das verwendete Lösungsmittel ist, desto besser die gebildeten Bortrifluorid/sek.-Alkohol-Komplexe darin löslich sind.

Bei der Erzeugung von Bortrifluorid/sek.-Alkohol-Komplexen in unpolaren Lösungsmitteln, wie den obengenannten Kohlenwasserstoffen oder einer Polyisobutenlösung, kann es daher infolge einer Überschreitung des Löslichkeitsproduktes zur Abscheidung des Bortrifluorid/sek.-Alkohol-Komplexes unter Ausbildung einer Emulsion oder Suspension kommen. Da das erfindungsgemäße Verfahren sowohl durch homogen im Reaktionsmedium gelöste als auch durch heterogen im Reaktionsmedium verteilte Katalysatorkomplexe katalysiert wird, sind solche Katalysatorabscheidungen in der Regel nicht kritisch.

Die Bortrifluorid/sek.-Alkohol-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden.

Zur Zwischenlagerung werden die Lösungen der vorgeformten Bortrifluorid/-sek.-Alkohol-Komplexe, gegebenenfalls nach Verdünnung mit weiterem Lösungsmittel, zweckmäßigerweise in kühlbare Behälter gefüllt und bei Temperaturen von im allgemeinen unter 0°C bis zu ihrem Gebrauch gelagert.

Eine andere, bevorzugte Variante besteht darin, daß man die Bortrifluorid/sek-Alkohol-Komplexe in situ in der Polymerisationsapparatur erzeugt. Bei dieser Verfahrensweise wird der betreffende sekundäre Alkohol, gegebenenfalls gemeinsam mit einem Lösungsmittel und zusammen mit dem Isobuten in die Polymerisationsapparatur eingespeist und Bortrifluorid in der erforderlichen Menge in dieser Mischung der Reaktanten dispergiert, in der es sich mit dem Alkohol zum Bortrifluorid/sek.-Alkohol-Komplex umsetzt. Anstelle eines zusätzlichen Lösungsmittels kann bei der in situ-Erzeugung des Bortrifluorid-Katalysator-Komplexes vorteilhaft Isobuten oder die Reaktionsmischung aus nicht umgesetztem Isobuten und Polyisobuten als Lösungsmittel fungieren. Dient die Reaktionsmischung aus Polyisobutenhaltigem Isobuten als Lösungsmittel, wird selbstverständlich das Isobuten in der Regel nicht vollständig umgesetzt und zweckmäßigerweise ein Isobuten-Teilumsatz von z.B. ca. 70 % eingestellt.

Eine andere der in situ-Darstellung der Bortrifluorid/sek.-Alkohol-Komplexe praktisch äquivalente Ausführungsform des erfindungsgemäßen Verfahrens ist die Erzeugung dieser Komplexe im Zulauf zum Polymerisationsreaktor. Bei dieser Ausführungsform wird der sek. Alkohol über eine gekühlte Rohrleitung dem Reaktor zugeführt und kurz vor seiner Einleitung durch Zudosieren von Bortrifluorid in die Rohrleitung zu den betreffenden Bortrifluorid/sek.-Alkohol-Komplexen umgesetzt. Je nach Zulaufgeschwindigkeit beträgt die Verweilzeit der so gebildeten Bortrifluorid/sek.-Alkohol-Komplexe im Zuleitungsrohr im allgemeinen weniger als 20 Minuten, vorzugsweise weniger als 10 Minuten und besonders bevorzugt weniger als 1 Minute. Besonders bevorzugt werden im erfindungsgemäßen Verfahren die Bortrifluorid/sek.-Alkohol-Komplexe jedoch in situ im Polymerisationsgemisch erzeugt.

Die in situ-Darstellung der Bortrifluorid/sek.-Alkohol-Komplexe bei der Herstellung hochreaktiver Polyisobutene, stellt eine bedeutende Vereinfachung des Verfahrens zu deren Herstellung dar, erwähnt sei hier nur der verminderte apparative Aufwand, da keine Reaktoren zur Herstellung vorgeformter Komplexe und auch keine Lagertanks für die vorgeformten Komplexlösungen mehr benötigt werden, und war bislang bei der Verwendung von Bortrifluorid-Komplexen mit primären Alkoholen zur Herstellung hochreaktiven Polyisobutens nicht ohne die Inkaufnahme von Doppelbindungsverschiebungen in beträchtlichem, die Qualität des so erhältlichen Produktes deutlich verschlechterndem Ausmaß möglich. Die Ursache für dieses vorteilhafte Verhalten der erfindungsgemäßen Cokatalysatoren ist nicht bekannt.

Zweckmäßigerweise werden die Katalysatoren aus Bortrifluorid und sekundärem Alkohol in dem Molverhältnis hergestellt, daß der im erfindungsgemäßen Verfahren zu verwendende Katalysator haben soll, d.h. nach der Erzeugung des betreffenden Komplexes wird das Molverhältnis Bortrifluorid/sek.-Alkohol üblicherweise nicht mehr geändert.

Das Molverhältnis Bortrifluorid/einwertiger sek.-Alkohol der erfindungsgemäß einsetzbaren Katalysatoren beträgt 0,5 bis 0,9, vorzugsweise 0,55 bis 0,7, d.h. der sekundäre Alkohol wird bezüglich des Bortrifluorids in überstöchiometrischen Mengen eingesetzt. Sind im Reaktionssystem weitere Substanzen enthalten, die in der Lage sind mit Bortrifluorid Komplexe zu bilden, so erweist es sich in der Regel als vorteilhaft, das Reaktionssystem so weit mit Bortrifluorid abzusättigen, daß sich die angegebenen Bortrifluorid/sek.-Alkohol-Molverhältnisse trotz der eventuell stattfindenden konkurrierenden Komplexbildung des Bortrifluorids mit diesen Substanzen einstellen. Inwieweit und in welcher Weise alle Alkoholmoleküle an die Borverbindung bei der Komplexbildung gebunden werden, ist nicht bekannt, allerdings ist die Anwendung einer vermeintlich überschüssigen Menge an Alkohol für das Ergebnis des erfindungsgemäßen Verfahrens kritisch und bereits bei Anwendung eines 1:1-Komplexes aus Bortrifluorid und einwertigem sekundärem Alkohol kommt es im erfindungsgemäßen Verfahren in erheblichem Umfang zu Doppelbindungsverschiebungen im Polyisobutenprodukt.

Als Rohstoff zur Herstellung der erfindungsgemäß anwendbaren Bortrifluorid/sek-Alkohol-Komplexe wird zweckmäßigerweise gasförmiges Bortrifluorid benutzt, wobei technisches, noch geringe Mengen Schwefeldioxid enthaltendes (Reinheit: 96,5 Gew.-%), vorzugsweise aber hochreines Bortrifluorid (Reinheit: 99,5 Gew.-%) verwendet werden kann. Als Bortrifluoridquelle können aber auch Bortrifluorid-Komplexe dienen, die in Gegenwart sekundärer Alkohole unter Freisetzung des ursprünglichen Komplexliganden die gewünschten Komplexe bilden. Bei allen diesen Herstellverfahren als auch gegebenenfalls bei der Lagerung der Bortrifluorid/sek.-Alkohol-Komplexe sollte unter weitgehendem Ausschluß von Feuchtigkeit gearbeitet werden, da sich andernfalls Bortrifluorid-Wasser-Addukte bilden können.

Werden Bortrifluorid-Komplexe mit anderen Komplexbildnern als sekundären Alkoholen erzeugt, beispielsweise mit primären Alkoholen oder mit Ethern, so führt der Zusatz sekundärer Alkohole zu diesen Komplexbildnern zur Bildung von Bortrifluorid-Komplex-Katalysatoren, welche bei Anwendung im erfindungsgemäßen Verfahren zur Herstellung von Polyisobuten hinsichtlich ihrer Selektivität verbesserte Eigenschaften haben, verglichen mit solchen Katalysatoren, die ohne Zusatz sekundärer Alkohole hergestellt wurden.

Zur erfindungsgemäßen Herstellung hochreaktiver Polyisobutene wird also die vorgebildete Bortrifluorid/sek.-Alkohol-Komplexlösung oder Suspension entsprechend dem Katalysatorbedarf im Isobuten verteilt oder alternativ der Katalysator im sek.-Alkoholhaltigen Isobutenstrom durch Einleiten von gasförmigem Bortrifluorid in situ erzeugt. Als Isobuten-Feedstock können im erfindungsgemäßen Verfahren reines Isobuten aber auch Gemische von Isobuten mit anderen Kohlenwasserstoffen eingesetzt werden, deren Isobutengehalt zweckmäßigerweise nicht unter 5 Gew.-% betragen sollte. Vorzugsweise werden Kohlenwasserstoffgemische mit hohem Isobutengehalt und einem geringen Butadiengehalt verwendet, besonders bevorzugt ist allerdings ein reiner Isobuten-Feedstock. Dieser kann als solcher in Gegenwart von inerten Lösungsmitteln, wie gesättigten Kohlenwasserstoffen, beispielsweise Butan, Pentan, Hexan, Isooctan oder Cyclohexan, halogenierten Kohlenwasserstoffen, wie Methylenchlorid oder Chloroform, oder Kohlenstoffhalogenverbindungen mit geeigneten Schmelz- und Siedepunkten, mit Hilfe des erfindungsgemäßen Katalysatorsystems zum Polyisobuten umgesetzt werden. Der Isobuten-Feedstock kann geringe Mengen an Kontaminanten wie Wasser, Carbonsäuren oder Mineralsauren enthalten, ohne daß es zu kritischen Ausbeute- oder Selektivitätseinbrüchen bei der Polymerisation kommt. Es ist aber zweckdienlich und vorteilhaft, eine Anreicherung dieser Verunreinigungen in der Anlage zu vermeiden, indem man solche Schadstoffe beispielsweise durch Adsorption an feste Adsorbentien, wie Aktivkohle, Molekularsiebe oder Ionen- austauscher aus dem isobutenhaltigen Feedstock entfernt.

Die Polymerisation des Isobutens kann diskontinuierlich, halbkontinuierlich oder kontinuierlich durchgeführt werden. Dazu kann in an sich herkömmlichen Reaktoren, wie Rohrreaktoren, Rohrbündelreaktoren oder Rührkesseln gearbeitet werden, bevorzugt wird das erfindungsgemäße Verfahren in einem Schlaufenreaktor, also einem Rohr- oder Rohrbündelreaktor mit stetigem Umlauf des Reaktionsgutes, durchgeführt, wobei in der Regel das Verhältnis von Zulauf zu Umlauf zwischen 1 : und 1 : 1000, vorzugsweise zwischen 1 : 50 und 1 : 200 v/v variieren kann. Es versteht sich von selbst, daß die Zulaufmenge nach Äquilibrierung der Polymerisationsreaktion gleich der Menge des Reaktionsaustrages ist.

Zur Vermeidung hoher lokaler und stationärer Katalysatorkonzentrationen in der Polymerisationsapparatur, die Anlaß zu Doppelbindungsverschiebungen geben können, ist es zweckmäßig sowohl bei der Einleitung vorgeformter Katalysatorkomplexe in den Reaktor als auch bei der in situ-Darstellung der Bortrifluorid-Komplexe im Reaktor für eine gute Durchmischung aller Reaktionspartner schon bei der Einleitung in den Reaktor zu sorgen. Des weiteren ist es zweckdienlich, eine turbulente Strömung des Reaktionsgutes im Reaktor zu erzeugen, wozu der Reaktor beispielsweise mit geeigneten Einbauten, wie Umlenkblechen, versehen oder die Rohrquerschnitte so dimensioniert werden können, daß sich eine geeignete Strömungsgeschwindigkeit einstellt.

Die Verweilzeit des zu polymerisierenden Isobutens im Reaktor kann 5 sec. bis mehrere Stunden betragen, vorzugsweise wird eine Verweilzeit von 1 bis 30 und besonders bevorzugt, von 2 bis 20 Minuten gewählt. Die Bruttoreaktionsgeschwindigkeit ist von der Menge, vor allem aber dem Molverhältnis des eingesetzten Katalysators abhängig. Üblicherweise wird der Bortrifluorid/sek.-Alkohol-Katalysator in Mengen von 0,05 bis 1 Gew.-%, bezogen auf das eingesetzte Isobuten oder Isobuten-Kohlenwasserstoffgemisch, zugeführt.

Die Polymerisation wird zweckmäßigerweise bei Temperaturen unterhalb 0°C durchgeführt. Obwohl Isobuten noch bei wesentlich tieferen Temperaturen erfolgreich zu hochreaktivem Polyisobuten polymerisiert werden kann, wird vorzugsweise bei Temperaturen zwischen -4 und -60°C, insbesondere zwischen -4 und -30°C und besonders bevorzugt zwischen -10 und -20°C gearbeitet. Im allgemeinen wird die Polymerisation unter Atmosphärendruck ausgeführt, die Anwendung erhöhten Drucks, insbesondere das Arbeiten unter dem Eigendruck des Reaktionssystems, ist ebenfalls möglich, für das Resultat der Polymerisation aber in der Regel unerheblich. Vorteilhaft wird die Polymerisationsreaktion unter isothermen Bedingungen und unter Einstellung einer konstanten, stationären Monomerkonzentration im Reaktionsmedium betrieben. Die stationäre Isobutenkonzentration kann im Prinzip beliebig gewählt werden, zweckmäßigerweise wird in der Regel eine Monomerkonzentration von 0,2 bis 50, vorzugsweise von 0,2 bis 5 Gew.-%, bezogen auf die gesamte Polymerisationsmischung, eingestellt.

Da die Polymerisationsreaktion exotherm verläuft, wird die Polymerisationswärme in der Regel mit Hilfe einer

Kühlvorrichtung, die beispielsweise mit flüssigem Ammoniak als Kühlmittel betrieben werden kann, abgeführt. Eine andere Möglichkeit die Polymerisationswärme abzuleiten, ist die Siedekühlung. Dabei wird die freiwerdende Wärme durch die Verdampfung des Isobutens und/oder anderer leicht flüchtiger Bestandteile des Isobuten-Feedstocks oder des gegebenenfalls leichtflüchtigen Lösungsmittels wie Ethan, Propan oder Butan verbraucht, wodurch die Temperatur konstant bleibt.

Der Isobutenumsatz kann prinzipiell beliebig eingestellt werden. Es versteht sich aber von selbst, daß bei sehr niedrigen Isobutenumsätzen die Wirtschaftlichkeit des Verfahrens in Frage gestellt ist, wohingegen bei sehr hohen Isobutenumsätzen von mehr als 99 % die Gefahr von Doppelbindungsverschiebungen immer größer wird. Üblicherweise beträgt der Isobutenumsatz aus diesen Gründen zwischen 20 und 99 %, besonders bevorzugt sind Isobutenumsätze zwischen 90 und 98 %. Überraschenderweise finden bei diesen hohen Isobutenumsätzen unter Verwendung des erfindungsgemäßen Katalysatorsystems Doppelbindungsverschiebungen nur in geringem Umfang statt und das dabei erhältliche Polymerisat hat immer noch einen Anteil von mehr als 80 Mol.-% endständigen Vinylidengruppen. Zur Erzeugung von Polyisobuten mit mehr als 90 Mol.-% endständigen Doppelbindungen wird zweckmäßigerweise ein Isobutenumsatz von bis zu 95 %, vorzugsweise ein Isobutenumsatz zwischen 50 und 95, insbesondere zwischen 70 und 95 und besonders bevorzugt zwischen 80 und 95 % eingestellt.

Die hohe Selektivität für Polyisobutene mit endständigen Vinylidengruppen bei gleichzeitig hohen Isobutenumsätzen ist ein großer Vorteil des erfindungsgemäßen Verfahrens, der sich insbesondere beim Einsatz von Isobuten-Einsatzstoffen, welche Isobuten neben anderen Kohlenwasserstoffen nur in relativ niedrigen Mengen enthalten, beispielsweise Raffinat I, positiv auswirkt. Da bei derartigen Einsatzstoffen die Isolierung des nicht umgesetzten Isobutens nicht rentabel ist, dieses somit auch nicht in die Polymerisationsreaktion zurückgeführt werden kann, kommen niedrige Isobutenumsätze bei diesen Einsatzstoffen praktisch Ausbeuteverlusten gleich.

Wie bereits erwähnt, werden im erfindungsgemäßen Verfahren als Katalysatoren Bortrifluorid/sek.-Alkohol-Komplexe benutzt, bei denen das Molverhältnis Bortrifluorid zu sekundärem Alkohol 0,5 bis 0,9, vorzugsweise 0,55 bis 0,7 beträgt. Zur Herstellung von Polyisobutenen mit möglichst hohem Gehalt an endständigen Doppelbindungen wird die Anwendung solcher Bortrifluorid-sek.-Alkohol-Komplexe bevorzugt, welche den sekundären Alkohol in großem Überschuß bezüglich des Bortrifluorids enthalten. Beispielsweise werden bei der Herstellung von Polyisobutenen mit mehr als 90 Mol.-% endständigen Vinylidengruppen Komplexe aus Bortrifluorid und einwertigen sekundären Alkoholen mit Molverhältnissen von 0,5 bis 0,7 bevorzugt.

Zur Aufarbeitung wird der Reaktionsaustrag zweckmäßigerweise in ein Medium geleitet, das den Polymerisationskatalysator desaktiviert und auf diese Weise die Polymerisation abbricht. Dazu können beispielsweise Wasser, Alkohole, Acetonitril, Ammoniak oder wäßrige Lösungen von Mineralbasen, wie Alkalimetall- und ErdalkalimetallHydroxidlösungen, Lösungen von Carbonaten dieser Metalle u.ä. verwendet werden.

Im weiteren Gang der Aufarbeitung wird das Polyisobuten, zweckmäßigerweise nach mehreren Extraktionen zur Entfernung von Restmengen an Katalysator - üblicherweise Methanol- oder Wasserwäschen - destillativ in nicht umgesetztes Isobuten, Lösungsmittel, Oligomere und Polyisobuten getrennt. Das Isobuten, das Lösungsmittel und die Oligomeren können in die Polymerisationsapparatur zurückgeführt und weiter umgesetzt werden. Das gewünschte Polyisobuten kann als Sumpfprodukt aus der Destillationskolonne abgezogen werden.

Das erfindungsgemäße Verfahren ermöglicht die wirtschaftliche Herstellung hochreaktiver Polyisobutene, deren Gehalte an endständigen Doppelbindungen über 80 Mol.-%, bei besonderer Ausgestaltung des Verfahrens sogar über 90 Mol.-% betragen, mit sehr guten Selektivitäten bei sehr hohen Umsätzen und liefert zudem Polyisobutene im bevorzugten Molekulargewichtsbereich mit engen Molekulargewichtsverteilungen. Beispiele

Die mittleren Molmassen ($M_n$) der gemäß den Beispielen hergestellten Polymeren wurden mittels Gelpermeationschromatographie bestimmt, wobei standardisierte Polyisobutene zur Eichung verwendet wurden. Aus den erhaltenen Chromatogrammen wurde das Zahlenmittel $M_n$ nach der Gleichung

$$M_n = \frac{\Sigma C_i}{\Sigma \frac{C_i}{M_i}}$$

berechnet, in der $C_i$ für die Konzentration der einzelnen Polymerspecies i im erhaltenen Polymergemisch steht und in der $M_i$ das Molekulargewicht der einzelnen Polymerspecies i bedeutet. Die Molekulargewichtsverteilung, im folgenden als Dispersität D bezeichnet, wurde aus dem Verhältnis von Gewichtsmittel des Molekulargewichts ($M_w$) und Zahlenmittel des Molekulargewichts ($M_n$) nach der Gleichung

$$\frac{M_w}{M_n} = D$$

errechnet. Das Gewichtsmittel $M_w$ wurde aus den erhaltenen Chromatogrammen mit Hilfe der Formel

$$M_w = \frac{\Sigma C_i M_i}{\Sigma C_i}$$

bestimmt.

Der Gehalt an endständigen Vinylidengruppen wurde mit Hilfe der $^{13}C$-NMR-Spektroskopie bestimmt, wobei als Lösungsmittel deuteriertes Chloroform und als Standard Tetramethylsilan verwendet wurde.

Beispiel 1

Auf der Saugseite eines mit einer darin integrierten Umwälzpumpe ausgestatteten Schlaufenreaktors, dessen Rohrdurchmesser 10 mm und dessen Volumen 100 ml betrug, wurden im Verlauf von einer Stunde 600 g eines butadienarmen $C_4$-Schnittes, 37 mmol 2-Butanol und 22 mmol Bortrifluorid zugefahren. Das im Reaktor gebildete Polyisobuten wurde über eine Entnahmevorrichtung, die 2 cm vor der Zuführungsvorrichtung für die Ausgangsstoffe lag, ausgetragen.

Der eingesetzte $C_4$-Schnitt hatte die folgende Zusammensetzung:

4,0 Gew.-% Isobutan,
9,2 Gew.-% n-Butan,
29,0 Gew.-% Buten-1
7,7 Gew.-% trans-Buten-2
4,5 Gew.-% cis-Buten-2
45,4 Gew.-% Isobuten
weniger als 50 ppm Butadien
ca. 2 ppm Wasser.

Der Reaktor wurde so gekühlt, daß im Reaktionsmedium die Temperatur -13°C betrug. Der Isobutenumsatz betrug 61 %, die mittlere Verweilzeit 6,6 Minuten.

Der Reaktionsaustrag wurde in einem Rührbehälter zum Abbruch der Polymerisation kontinuierlich mit 100 ml/h 10 gew.-%iger Natronlauge versetzt und das restliche Flüssiggas bei 40°C verdampft. Das Flüssiggas wurde abgezogen, bei -80°C kondensiert, gewogen und gaschromatographisch auf Isobuten untersucht. Der erhaltene Reaktionsaustrag wurde nach 2 Stunden ab der Äquilibrierung des Reaktors zur Probeentnahme gesammelt, wobei sich eine Probe aus dem während einer Stunde gesammelten Reaktionsaustrag zusammensetzte. Das erhaltene, entgaste Produkt wurde in 150 g Hexan gelöst und dreimal mit je 100 ml Wasser extrahiert. Anschließend wurde die organische Phase destilliert. Das gewünschte Polyisobuten verblieb als Destillationsrückstand bei einer Temperatur von 240°C und einem Druck von 2 mbar im Sumpf des Rotationsverdampfers zurück. Das erhaltene Polyisobuten hatte ein mittleres Molekulargewicht ($M_n$) von 2136 Dalton, seine Dispersität hatte den Wert 1,8. Die Auswertung des $^{13}C$-NMR-Spektrums ergab einen Gehalt an endständigen Doppelbindungen in Höhe von 81 Mol.-%.

Beispiel 2

Analog Beispiel 1 wurden 350 g reines Isobuten, 200 g Hexan, 50 mmol 2-Butanol und 31 mmol Bortrifluorid bei einer Reaktortemperatur von -10°C in den Polymerisationsreaktor eingeleitet, d.h. der Katalysator wurde in situ erzeugt.

Bei einem Isobutenumsatz von 90 % betrug die mittlere Verweilzeit 8,4 Minuten. Die Ausbeute an Polyisobuten betrug nach Aufarbeitung und Destillation 94,5 %, bezogen auf umgesetztes Isobuten. Das mittlere Molekulargewicht ($M_n$) des so hergestellten Polyisobutens betrug 1250 Dalton, für seine Dispersität wurde der Wert 1,6 ermittelt. Der Anteil endständiger Doppelbindungen betrug 85 Mol-%.

Beispiel 3

Es wurde mit den gleichen Einsatzstoffmengen gearbeitet wie in Beispiel 2, jedoch wurde hier ein vorgeformter Bortrifluorid/2-Butanol-Komplex als Katalysator zugesetzt. Der Komplex war durch Einleiten von gasförmigem Bortrifluorid in eine 1 molare Lösung von 2-Butanol in einem Gemisch aus 80 Vol.-% Hexan und 20 Vol.-% Methylenchlorid bei einer Temperatur von -15°C hergestellt worden. Die Polymerisation wurde bei einer Reaktor- temperatur von -14°C ausgeführt. Die mittlere Verweilzeit betrug 8 Minuten. Bei einem Isobutenumsatz von 90 % wurde eine Polyisobuten-ausbeute von 95,7 %, bezogen auf umgesetztes Isobuten, erzielt. Das mittlere Molekulargewicht ($M_n$) des so gewonnenen Polyisobutens betrug 1450 Dalton bei einer Dispersität von 1,7. Der Gehalt an endständigen Doppelbindungen lag bei 91 Mol-%.

Beispiel 4

Die Polymerisation wurde analog Beispiel 2 durchgeführt, jedoch wurde der Katalysator in situ aus 56 mmol Isopropanol und 47 mmol Bortrifluorid erzeugt. Bei einer Reaktortemperatur von -10°C wurde bei einem Isobutenumsatz von 89 % ein Polyisobuten in einer Ausbeute von 83,9 %, bezogen auf umgesetzes Isobuten, erhalten, das ein mittleres Molekulargewicht ($M_n$) von 840 Dalton und einen Wert für die Dispersität von 1,3 hatte. Der Gehalt des Polymeren an endständigen Doppelbindungen lag bei 85 Mol-%.

Beispiel 5

Die Polymerisation wurde analog Beispiel 3 ausgeführt, jedoch wurde als Katalysator ein vorgeformter Komplex mit einem Bortrifluorid/Isopropanol-Molverhältnis von 0,6 verwendet. Der Komplex war durch die Umsetzung entsprechender Mengen Isopropanol mit gasförmigem Bortrifluorid in Substanz bei -15°C hergestellt worden und anschließend mit einem Lösungsmittelgemisch aus Methylenchlorid und n-Hexan im Verhältnis 1 : 1 v/v so verdünnt worden, daß eine bezüglich ihres Gesamtisopropanol-Gehaltes 1-molare Lösung entstand. Bei einem Isobutenzulauf von 450 g/h, einem Hexanzulauf von 200 g/h und einem Zulauf von Katalysatorlösung von 35 ml/h wurde 8 h nach der Äquilibrierung der Umsetzung, das heißt nach Erreichen eines konstanten Umsatzes bei konstanter Reaktortemperatur und konstanter Säurezahl des Austrags, eine Probe des Reaktoraustrags gezogen und wie in Beispiel 1 beschrieben, aufgearbeitet. Bei einer Reaktortemperatur von -11°C und einer mittleren Verweilzeit von 6 Minuten wurde bei einem Isobutenumsatz von 86 % eine Polyisobuten-Ausbeute von 91,7 %, bezogen auf umgesetztes Isobuten, erhalten. Das entstandene Polyisobuten hatte ein mittleres Molekulargewicht ($M_n$) von 1290 Dalton, seine Dispersität hatte den Wert 1,6. Der Gehalt an endständigen Doppelbindungen betrug 95 Mol-%.

## Patentansprüche

1. Verfahren zur Herstellung hochreaktiver Polyisobutene mit einem Gehalt an endständigen Vinylidengruppierungen von über 80 Mol-% und einem mittleren Molekulargewicht von 500 - 5000 Dalton durch die kationische Polymerisation von Isobuten oder isobutenhaltigen Kohlenwasserstoffströmen in der flüssigen Phase mit Hilfe von Bortrifluorid als Katalysator und bei Temperaturen von 0°C bis - 60°C, **dadurch gekennzeichnet, daß** man in Gegenwart von geradkettigen oder verzweigten, einwertigen, sekundären Alkoholen mit 3 - 20 Kohlenstoffatomen polymerisiert und dabei ein Bortrifluorid/sek-Alkohol-Molverhältnis von 0,5 bis 0,9 anwendet.

2. Verfahren nach Anspruch 1, **dadurch gekennzeichnet, daß** man das Bortrifluorid und den sekundären Alkohol in der Polymerisationsapparatur zusammenführt und in situ in der Polymerisationsmischung Bortrifluorid/sek.-Alkohol-Komplexe erzeugt.

3. Verfahren nach Anspruch 1, **dadurch gekennzeichnet, daß** man das Bortrifluorid und den sek.-Alkohol vor deren Einleitung in die Polymerisationsapparatur zusammenführt und die dabei gebildeten Bortrifluorid/sek.-Alkohol-Komplexe in die Polymerisationsmischung leitet.

4. Verfahren nach Anspruch 1, **dadurch gekennzeichnet, daß** man als sekundären Alkohol Isopropanol oder 2-Butanol verwendet.

## Claims

1. A process for preparing highly reactive polyisobutenes with a content of terminal vinylidene groups of more than 80 mol% and an average molecular weight of 500 - 5000 Dalton by the cationic polymerization of isobutene or isobutene-containing hydrocarbon streams in liquid phase with the aid of boron trifluoride as catalyst and at from 0°C to -60°C, which comprises polymerizing in the presence of straight-chain or branched, monohydric secondary alcohols with 3 - 20 carbon atoms and in this instance a boron trifluoride/secondary alcohol molar ratio of 0.5 to 0.9 is employed.

2. A process as claimed in claim 1, wherein the boron trifluoride and the secondary alcohol are mixed in the polymerization apparatus, and boron trifluoride/ secondary alcohol complexes are generated in situ in the polymerization mixture.

3. A process as claimed in claim 1, wherein the boron trifluoride and the secondary alcohol are mixed before they are introduced into the polymerization apparatus, and the boron trifluoride/secondary alcohol complexes formed thereby are passed into the polymerization mixture.

4. A process as claimed in claim 1, wherein the secondary alcohol used is isopropanol or 2-butanol.

**Revendications**

1. Procédé de préparation de polyisobutènes très réactifs, ayant une teneur en groupements vinylidène terminaux supérieure à 80 % en moles et ayant une masse moléculaire moyenne de 500 à 5000 daltons, par polymérisation cationique en phase liquide d'isobutène ou de courants d'hydrocarbures contenant de l'isobutène, à l'aide de trifluorure de bore en tant que catalyseur et à des températures de 0 à -60°C, **caractérisé en ce que** l'on polymérise en présence de monoalcools secondaires à chaîne droite ou ramifiée ayant de 3 à 20 atomes de carbone, et que l'on utilise à cette occasion un rapport en moles du fluorure de bore à l'alcool secondaire de 0,5 à 0,9.

2. Procédé selon la revendication 1, **caractérisé en ce qu'**on réunit le trifluorure de bore et l'alcool secondaire dans l'appareil de polymérisation, et on produit in situ, dans le mélange de polymérisation, des complexes de trifluorure de bore et d'alcool secondaire.

3. Procédé selon la revendication 1, **caractérisé en ce qu'**on réunit le trifluorure de bore et l'alcool secondaire, avant leur introduction dans l'appareil de polymérisation, et on envoie dans le mélange de polymérisation les complexes de trifluorure de bore et d'alcool secondaire qui se forment à cette occasion.

4. Procédé selon la revendication 1, **caractérisé en ce qu'**on utilise en tant qu'alcool secondaire de l'isopropanol ou du 2-butanol.